# EUROPEAN PATENT SPECIFICATION

(11) **EP 2 789 847 B1**
(45) Date of publication and mention of the grant of the patent: **08.02.2017**
(21) Application number: 12855101.7
(22) Date of filing: 02.11.2012
(51) Int. Cl.: F03D 13/25

(54) **FLOATING TYPE WIND TURBINE GENERATION APPARATUS AND INSTALLATION METHOD THEREOF**
SCHWIMMENDE WINDKRAFTANLAGE UND INSTALLATIONSVERFAHREN DAFÜR
DISPOSITIF GÉNÉRATEUR D'ÉNERGIE ÉOLIENNE DU TYPE FLOTTANT ET PROCÉDÉ D'INSTALLATION ASSOCIÉ

(30) Priority: 05.12.2011 JP 2011265666
(43) Date of publication of application: 15.10.2014
(73) Proprietor: Mitsubishi Heavy Industries, Ltd., Tokyo 108-8215 (JP)
(72) Inventor: OHTA, Makoto, Tokyo 108-8215 (JP); KUMAMOTO, Hitoshi, Tokyo 108-8215 (JP); KOMATSU, Masao, Tokyo 108-8215 (JP)
(74) Representative: Intès, Didier Gérard André
(86) International application number: PCT/JP2012/078432
(87) International publication number: WO 2013/084632

(56) References cited:
- WO-A2-2011/137903
- JP-A- 2006 298 207
- JP-A- 2011 521 820

## Description

### TECHNICAL FIELD

This invention relates to a floating type wind turbine generating apparatus including a floating body floating on the water surface, a wind turbine generator installed on the floating body, and an installing method for the floating type wind turbine generating apparatus.

### BACKGROUND

In the case where a wind turbine generating apparatus is to be installed on the ocean and the like, a bottom-mounted type wind turbine generating apparatus is generally employed in a region where the water is shallow. A bottom-mounted type wind turbine generating apparatus includes a base disposed on the bottom of the water, and a wind turbine generator disposed on the base. However, in a region where the water is deep, the bottom-mounted type wind turbine generating apparatus is uneconomic. Therefore, using a floating type wind turbine generating apparatus would be considered.

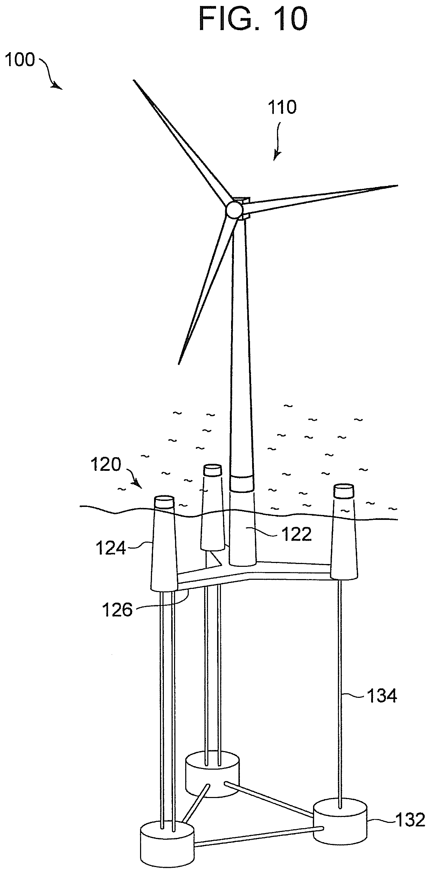

As a conventional floating type wind turbine generating apparatus, there is a wind turbine generating apparatus of a type called the TLP (Tension-leg Platform). FIG. 10 is a schematic diagram showing the conventional wind turbine generating apparatus of the TLP type.

The wind turbine generating apparatus 100 of the TLP type shown in FIG. 10 comprises a floating body 120 including a center column 122 and three corner columns 124 connected by a pontoon 126. A wind turbine generator 110 is disposed on the center column 124. Also, three foundation piles 132 planted into the bottom of the water and the three corner columns 124 are connected by steel pipes 134 as know as tendons. By pulling the floating body 120 in the perpendicular direction with the steel pipes 134 to force the floating body 20 to be halfway submerged, the floating body 120 is less likely to be swayed by wind and waves.

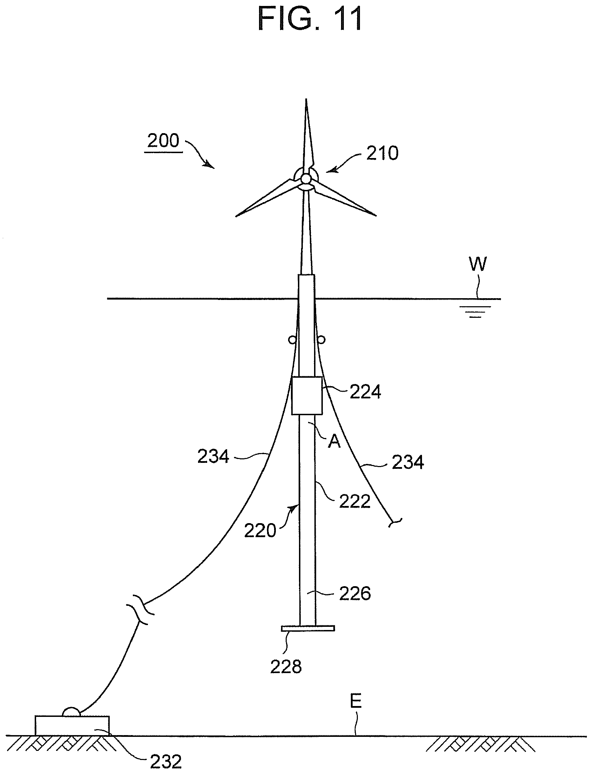

Further, as a conventional floating type wind turbine generating apparatus, there is a wind turbine generating apparatus of a type called the spar type. FIG. 11 is a schematic diagram of the conventional wind turbine generating apparatus of the spar type disclosed in Patent Document 1.

This wind turbine generating apparatus of the spar type 200 shown in FIG. 11 includes a main floating body 222 having an elongated hollow shape and a balance weight 226 formed at a lower end part of the main floating body 222. A wind turbine generator 210 is supported on an upper part of the floating body 220 in the state of protruding from the water surface. Also, a buoyant body 224 is provided for the upper underwater part of the floating body 220, while a footing 228 for suppressing sway of the floating body 220 is provided for the lower end of the main floating body 222. Further, a plurality of mooring cables 234 is radially arranged for the main floating body 222. The mooring cables 234 are fixed by the anchors 232 disposed on the bottom of the water. The wind turbine generating apparatus of the spar type 200 with the above configuration is configured such that sway by wind and waves is suppressed by lowering the gravity center position of the floating body 220 with the balance weight 220.

### Citation List

### Patent Literature

Patent Document 1: JP2002-188557A
Patent Document 2: JP2770449B
Patent Document 3: WO 2011/137903

### SUMMARY

### Technical Problem

However, while the wind turbine generating apparatus 100 of the TLP type as described above has excellent stability against wind and waves, high cost is required for construction of the foundation because the foundation piles 132 are hammered into the bottom of the water and then the floating body 120 and the foundation piles 132 are connected by the steel pipes 134 of high strength.

Also, for the above wind turbine generating apparatus 200 of the spar type described above, it is necessary to form the main floating body 222 into an elongated shape in order to secure the stability against wind and waves. This makes it difficult to secure stability of the floating body 220 upon installing the wind turbine generator 210 on the floating body 220. For instance, it is necessary to provide a temporary structure for securing stability of the floating body 220 as well as to use a large shipboard crane and the like upon installing the wind turbine generator 210 on the floating body 220, which thereby requires high cost for installation of the wind turbine generator 210.

Patent Document 2 discloses a floating type wind turbine generating apparatus with which the cost for constructing the floating body is reduced by forming the floating body floatable on the water by connecting pipes into a truss shape and then disposing a plurality of wind turbine generators on this floating body. However, since the floating type wind turbine generating apparatus of Patent Document 2 includes wind turbine generators arranged in a staggered fashion, there is a problem of interference between the wind turbine generators, which reduces the power generation efficiency of the wind turbine generators on the downwind side. Patent Document 3 discloses another example of floating type wind turbine apparatus.

The present invention was made in order to solve the problems and to achieve the object of the prior art as described above. It is an object to provide a floating type wind turbine generating apparatus with excellent stability against wind and waves, low manufacturing and installing cost, and high generation efficiency regardless of wind directions. Also, it is an object of the present invention to provide an installing method capable of installing such a floating type wind turbine generating apparatus easily and at low cost.

### Solution to Problem

The present invention is to solve the problems and to achieve the object of the prior art as described above. A floating type wind turbine generating apparatus comprises: a floating body floating on a surface of a water; and
a wind turbine generator installed on the floating body,
wherein the floating body is formed into a substantially V-shape in a planar view including three columns and two hollow lower hulls connecting two of the three columns, a top face of each of the columns being disposed above a top face of each of the lower hulls and the wind turbine generator being installed on the top face of at least one of the three columns, and wherein a water is injected into the hollow lower hulls so that the floating body is configured to be installed on the water in a state where the top faces of the lower hulls are underwater.

As described above, the floating type wind turbine generating apparatus of the present invention includes a floating body formed into a substantially V-shape in the planar view including three columns and two hollow lower hulls connecting two of the three columns. The wind turbine generator is disposed on the top face of only one of the three columns that is positioned in the middle of the three columns. It is possible for the floating body having a substantially V-shape in the planar view to have a long distance between the column and the gravity center position of the whole. As a result, stability against sway is enhanced. Also, as it is possible to reduce the number of lower hulls compared to a polygonal shape such as a triangular shape, it is possible to reduce the manufacturing cost of the floating body.

Further, injecting water into the hollow lower hulls causes the floating body to be floatably installed in the state where the top faces of the lower hulls are submerged. As a result, such a configuration is achieved that the floating body is less likely to sway in wind or waves.

In the above invention, the floating type wind turbine generating apparatus may further comprise a partition wall formed inside each of the lower hulls, wherein the partition wall extends in a perpendicular direction to an axial direction and dividing an inside of each of the lower hulls into a plurality of compartments.

With the above configuration, it is possible to control the amount of the water injected into the lower hulls by appropriately selecting compartments to be injected and compartments not to be injected for the compartments formed in the axial direction. Also, it is possible to adjust the gravity center position of the whole to the stable direction.

Further, in the above invention, the two lower hulls may be connected by a beam member. That is, the two lower hulls and the beam member may have a substantially reversed A-shape in the planar view.

In the case of the floating body formed into a substantially V-shape in the planar view, the stress concentrates the most on the connection part between the two lower hulls. With two lower hulls connected by a beam member to form a substantially reversed A-shape in the planar view, the stress concentration on the connection part would be reduced.

Further, in the above invention, the wind turbine generator may be disposed on the column positioned in middle of the three columns. That is, the floating type wind turbine generating apparatus may be configured to have one wind turbine generator provided for one floating body.

In this case, it is possible to reduce the size of the floating body and to lower the manufacturing cost of the floating body because it is not necessary to take into account interference of the wind turbine generators that may occur when a plurality of wind turbine generators are provided for one floating body. Also, even when the wind blows in all directions, it is possible to maintain the high generation efficiency of the wind turbine generators.

Further, in an example which does not form part of the present invention, the wind turbine generator may be disposed on the column positioned at each end of the three columns. That is, it is possible to provide two wind turbine generators for one floating body in the floating type wind turbine generating apparatus.

In the case where the floating type wind turbine generating apparatus is floatably installed in a place where the wind flows only in nearly one reciprocating direction throughout a year, such as the reciprocating direction from east to west and from west to east for instance, only the interference of wind turbine generators in the reciprocating direction needs to be taken into consideration. Therefore, by disposing a wind turbine generator on each of the columns disposed on the respective ends of the three columns, it is possible to provide two wind turbine generators for one floating body without decreasing the power generation efficiency.

Further, an installing method for a floating type wind turbine generating apparatus according to any of claims 1 to 3 comprises the steps of:
installing the wind turbine generator on the floating body from a land using a lifting device such as a crane in a state where the floating body is floated on a water surface beside the land;
towing the floating body on which the wind turbine generator is installed to a predetermined position on the water; and
injecting a water into the lower hulls of the floating body so as to place the top face of each of the lower hulls underwater for the floating body towed to the predetermined position.

As described above, in the installing method for a floating type wind turbine generating apparatus, the wind turbine generator is installed on the floating body from the land using a lifting device such as a crane in the state where the floating body is floated on the water surface beside the land. Then, the floating body on which the wind turbine generator is installed is towed to a predetermined position on the water. Subsequently, water is injected into the lower hulls of the floating body. In this manner, the floating type wind turbine generating apparatus is floatably installed on a predetermined position on the water. As a result, stability of the floating body is easily secured upon installing the wind turbine generator. Also, it is not necessary to use a large shipboard crane as in the conventional case and thus the installing cost is reduced, since the wind turbine generator is installed on the floating body from the land using a lifting device such as a crane.

### Advantageous Effects

According to the present invention, it is possible to provide a floating type wind turbine generating apparatus with excellent stability against wind and waves, low manufacturing and installing cost, and high generation efficiency regardless of wind directions. Also, according to the present invention, it is possible to provide an installing method capable of floatably installing such a floating type wind turbine generating apparatus easily and at low cost.

### BRIEF DESCRIPTION OF DRAWINGS

FIG. 1 is an oblique view of the floating type wind turbine generating apparatus according to the present invention.
FIG. 2 is a side view of the floating type wind turbine generating apparatus according to the present invention.
FIG. 3 is a planar view of the floating type wind turbine generating apparatus according to the present invention.
FIG. 4 is an oblique view of the internal configuration of the lower hull according to the present invention.
FIG. 5 is an oblique view of the floating type wind turbine generating apparatus according to an example which does not form part of the present invention.
FIG. 6 is a planar view of the floating type wind turbine generating apparatus according to another example which does not form part of the present invention.
FIGs. 7A to 7C are diagrams for illustrating the installing method for the floating type wind turbine generator according to the present invention.
FIG. 8 is an oblique view of the state of the floating type wind turbine generating apparatus according to the present invention upon towing and installation.
FIGs. 9A to 9B are illustration in the planar view of modifications of the floating type wind turbine generator according to the present invention.
FIG. 10 is a schematic diagram of the conventional wind turbine generating apparatus of the TLP type.
FIG. 11 is a schematic diagram of the conventional wind turbine generating apparatus of the spar type disclosed in Patent Document 1.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

### (Floating type wind turbine generating apparatus 1)

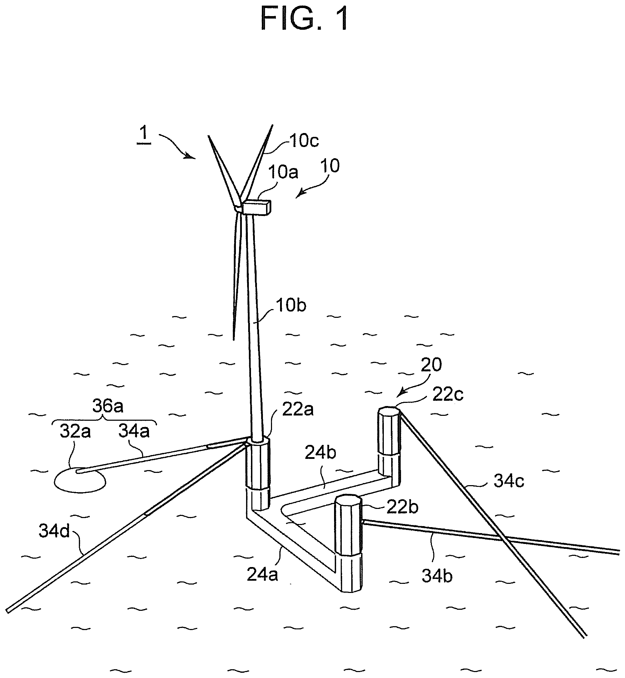

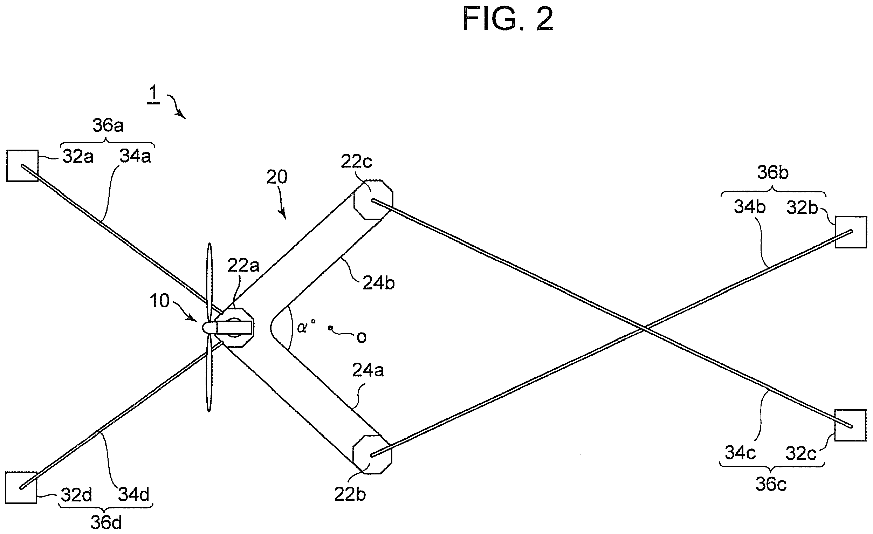

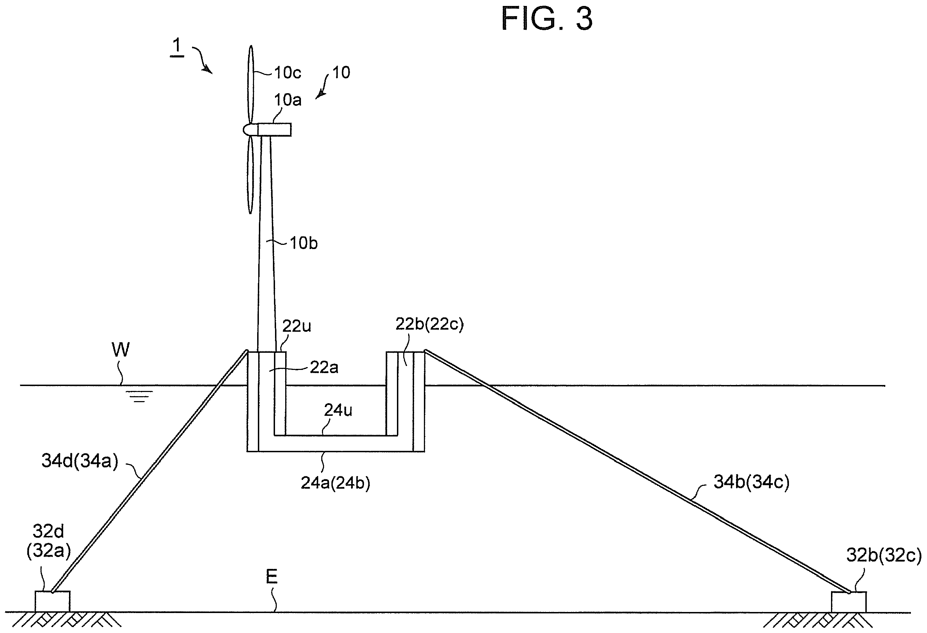

FIG. 1 is an oblique view of the floating type wind turbine generating apparatus according to the present invention. FIG. 2 is a planar view of the floating type wind turbine generating apparatus according to the present invention. FIG. 3 is a side view of the floating type wind turbine generating apparatus according to the present invention. In reference to FIGs. 1 to 3, the overall configuration of the floating type wind turbine generating apparatus according to the present invention will be described. As shown in FIGs. 1 to 3, the floating type wind turbine generating apparatus according to the present invention includes a floating body 20 floating on the water surface, and a wind turbine generator 10 installed on the floating body 20.

The floating body 20 includes three columns 22 (22a, 22b, 22c), the first lower hull 24a connecting the column 22a and column 22b, and the second lower hull 24b connecting the column 22a and column 22c. Accordingly, the floating body 20 is formed into a substantially V-shape in the planar view as shown in FIG. 2. The lower hulls 24 are formed to be hollow in the cross-sectional view as described below. Also, the columns 22 may also be hollow in the cross-sectional view because the buoyancy acting on the columns 22 increases stability of the floating body 20 as a whole.

Further, as shown in FIG. 3, the top faces 22u of the columns 22 are formed to be positioned above the top faces 24u of the lower hulls 24. Also, when floatably installed, the top faces 24u of the lower hulls 24 are submerged and the top faces 22u of the columns 22 protrude from the water surface. A wind turbine generator 10 is disposed on the top face of the column 22a positioned in the middle of the above described three columns 22.

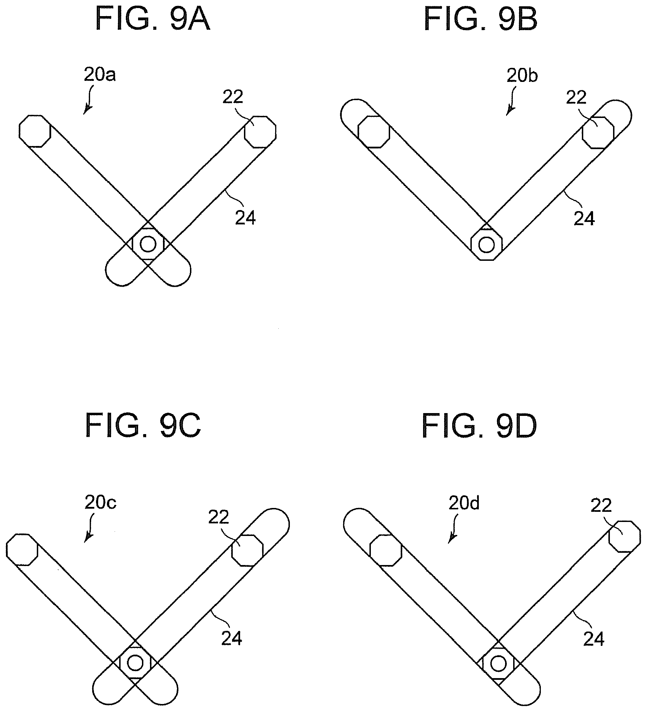

In the present invention, "substantially V-shape" means a shape that can be visually recognized as a substantially V-shape in the entire planar view. Thus, the shapes shown in FIGs. 9A to 9D are included in the substantially V-shape of the present invention.

The wind turbine generator 10 includes a nacelle 10a, a tower 10b fixed on the top face of the column 22a, and a blade 10c rotatably mounted on the nacelle 10a. The nacelle 10a is supported by the tower 10b capable of rotating around the axial direction of the tower 10b. The nacelle 10a is thereby configured to orient the blade 10c to the upwind side in accordance with the wind direction.

The floating body 20 is configured such that its drift and rotation are prevented by a mooring device 36. The mooring device 36 includes anchors 32 fixed to the bottom of the water, and mooring cables 34 connecting the floating body 20 to the anchors.

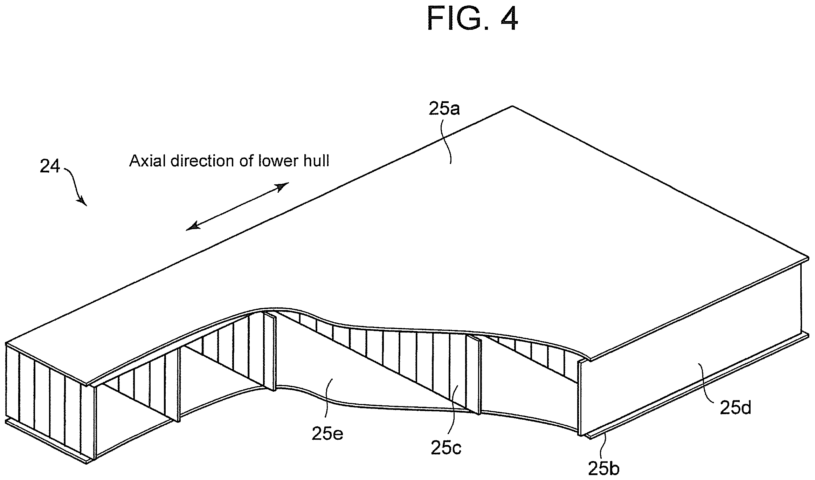

As shown in FIG. 4, the inside of the lower hulls 24 is formed to be hollow in the cross-sectional view surrounded by a deck outer plate 25a, a bottom outer plate 25b and a side outer plate (not shown). Also, a plurality of lateral partition walls 25c (partition walls) is formed in a direction perpendicular to the axial direction of the lower hulls 24. The lateral partition walls 25c thereby divide the inside of the lower hulls 24 into a plurality of watertight compartments 25e. Further, an injecting device (not shown) capable of injecting water into each of the compartments 25e is provided. Herein, longitudinal partition walls 25d may be formed inside the lower hulls 24, extending in the axial direction of the lower hulls 24.

Then, water is injected into the compartments 25e with the above described injecting device, so that the top faces 24 of the lower hulls 24 are sunk under the water and the top faces 22u of the columns 22 protrude from the water surface. Also, the floating body 20 is moored by the above described mooring device 36. As a result, the floating type wind turbine generating apparatus 1 of the present invention is floatably installed on the water.

The floating type wind turbine generating apparatus 1 of the present invention with the above configuration includes the floating body 20 formed into a substantially V-shape in the planar view including three columns 22 and two hollow lower hulls 24 connecting two of the three columns 22. The wind turbine generator 10 is disposed on the top face of the column 22a positioned in the middle of the three columns 22. As shown in FIG. 3, it is possible for the floating body 20 having a substantially V-shape in the planar view to have a long distance between the column 22 and the gravity center position "o" of the whole. As a result, stability against sway is increased. Also, as it is possible to reduce the number of lower hulls compared to a polygonal shape such as a triangular shape, it is possible to reduce the manufacturing cost of the floating body.

Injecting water into the hollow lower hulls 24 causes the floating body 20 to be floatably installed on the water in the state where the top faces 24u of the lower hulls 24 are submerged and the top faces 22u of the columns 22 protrude from the water surface. As a result, such a configuration is achieved that the floating body 20 is less likely to sway in wind or waves since it is installed on the water in the state where the top faces 24u of the lower hulls 24 are under the water.

In the present invention, the angle α formed by the lower hull 24a and the lower hull 24b is not particularly limited. However, the angle α being too small (closer to zero) causes unsteadiness against right-to-left sway and thus is not preferable. Also, the angle α being too large (closer to 180 degrees) causes unsteadiness against front-to-back sway and thus is not preferable. Accordingly, the angle α of the present invention may be preferably 60 to 120 degrees inclusive, more preferably 75 to 105 degrees inclusive, and above all 90 degree is the most preferable.

Further, with the compartments 25e formed in the axial direction, it is possible to control the amount of the water injected into the lower hulls 24 by appropriately selecting compartments 25e to be injected and compartments 25e not to be injected. As a result, it is possible to control the amount of the water injected so that the top faces 24u of the lower hulls 24 are underwater and the top faces 22u of the columns 22 are out of the water surface. Also, the gravity center position of the whole may be adjusted so as to enhance stability of the whole by increasing the length between the column 22 and the gravity center position of the whole.

In the above embodiment, the wind turbine generator 10 is disposed on only the column 22a positioned in the middle of the three columns 22. That is, the floating type wind turbine generating apparatus 1 is configured to have one wind turbine generator 10 disposed on one floating body 20. With this configuration, it is not necessary to take into account interference of the wind turbines that may occur in the case where a plurality of wind turbine generators is provided for one floating body. As a result, it is possible to reduce the size of the floating body 20 and to lower the manufacturing cost of the floating body 20. Also, interference of the wind turbines does not occur even when the wind blows in all directions. As a result, it is possible to maintain high generation efficiency of the wind turbine generator 10.

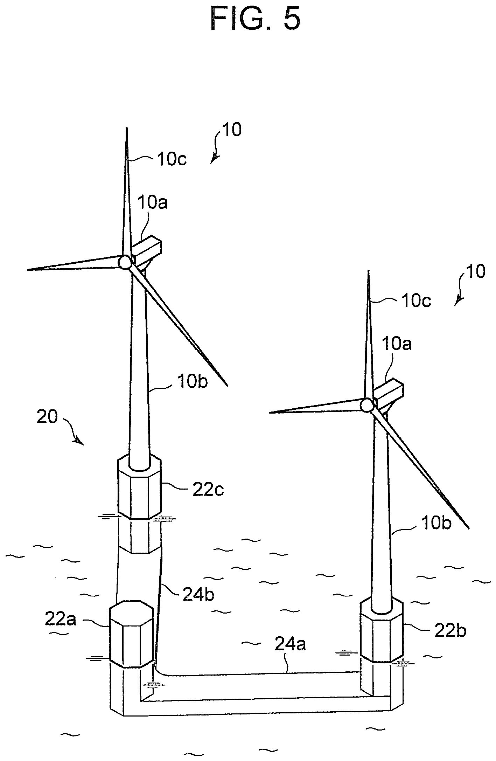

Further, as shown in FIG. 5, the wind turbine generator 10 may be disposed on each of the columns 22b, 22c positioned the respective ends of the three columns 22 in the floating type wind turbine generating apparatus 1. That is, it is possible to provide two wind turbine generators 10 for one floating body 20 in the floating type wind turbine generating apparatus 1.

In the case where the floating type wind turbine generating apparatus 1 is floatably installed in a place where the wind flows only in nearly single reciprocating direction throughout a year, such as the reciprocating direction from east to west and from west to east for instance, only the interference of wind turbine generators 10 in the reciprocating direction needs to be taken into consideration. Therefore, by disposing a wind turbine generator 10 on each of the columns 22b, 22c disposed the respective ends of the three columns 22, it is possible to provide two wind turbine generators 10 for one floating body 20 without detracting from the power generation efficiency.

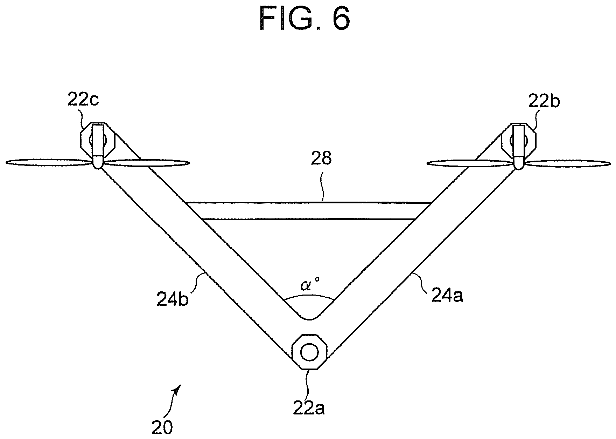

Further, in the floating type wind turbine generating apparatus 1 of the present invention, two lower hulls 24a, 24b may be connected to each other by a beam member 28. That is, as shown in FIG. 6, the floating type wind turbine generating apparatus 1 may be formed into a substantially reversed A-shape in the planar view.

In the case of the floating body formed into a substantially V-shape in the planar view, the stress concentrates the most on the connection part between the two lower hulls 24. With two lower hulls 24a, 24b connected by a beam member 28 to form a substantially reversed A-shape in the planar view as shown in FIG. 6, the stress concentration on the connection part would be reduced.

### (Installing method of the floating type wind turbine generating apparatus)

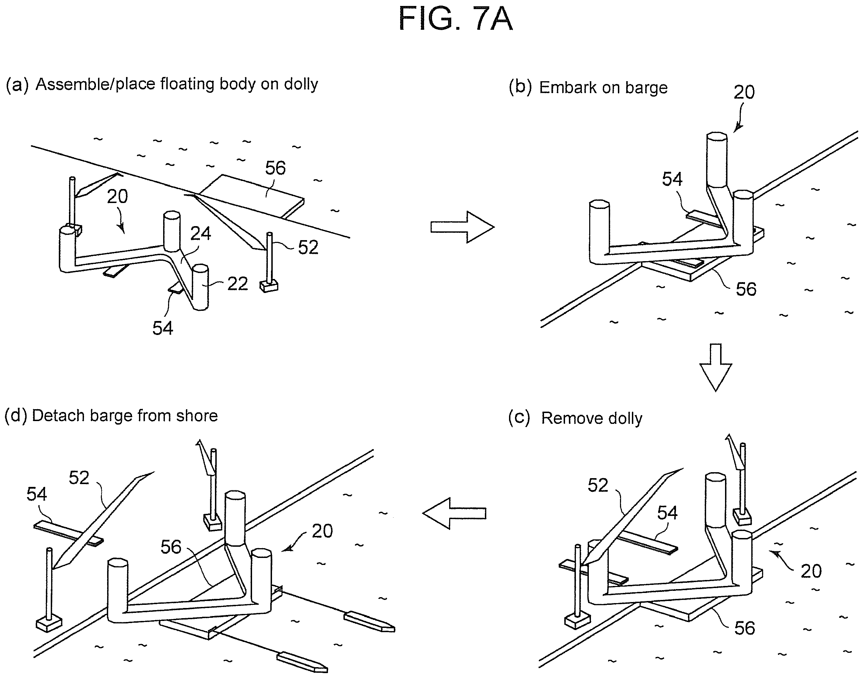

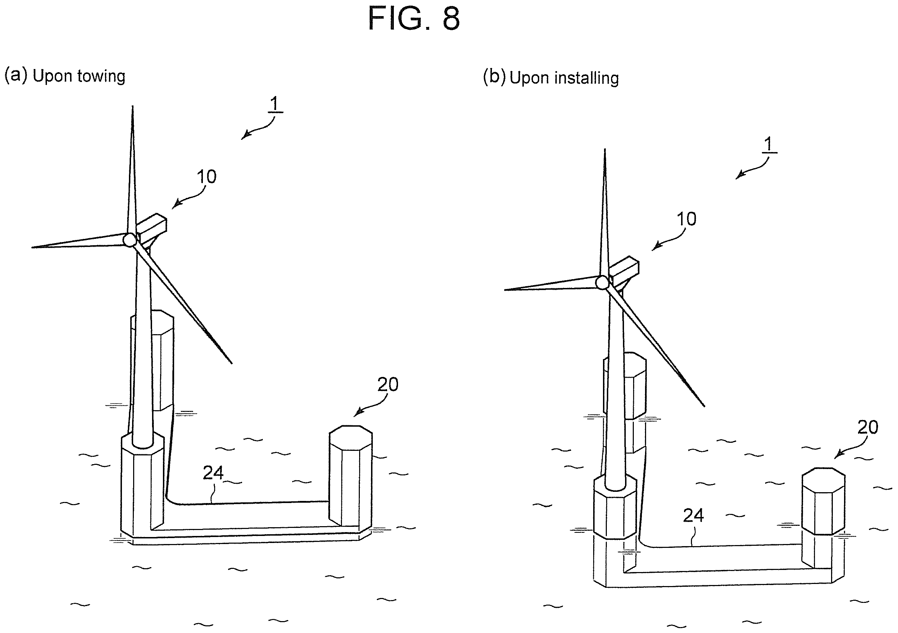

Subsequently, the installing method of the floating type wind turbine generating apparatus 1 will be described in reference to FIGs. 7A to 7B, and 8.

FIGs. 7A to 7C are diagrams for illustrating the installing method for the floating type wind turbine generator according to the present invention. FIG. 8 is an oblique view of the floating type wind turbine generating apparatus according to the present invention upon being towed and installed.

As shown in (a) to (d) of FIG. 7A, for the floating type wind turbine generating apparatus 1 of the present invention, the columns 22, the lower hulls 24 and the like are divided into appropriate and conveyable size and transferred to the assembling area beside the water surface. Then, the floating body 20 is assembled by a crane 52. The assembled floating body 20 is placed on a dolly 54, and then embarked on a barge 56. Next, the dolly 54 is removed and the barge 56 is towed so that the floating body 20 is detached from the shore.

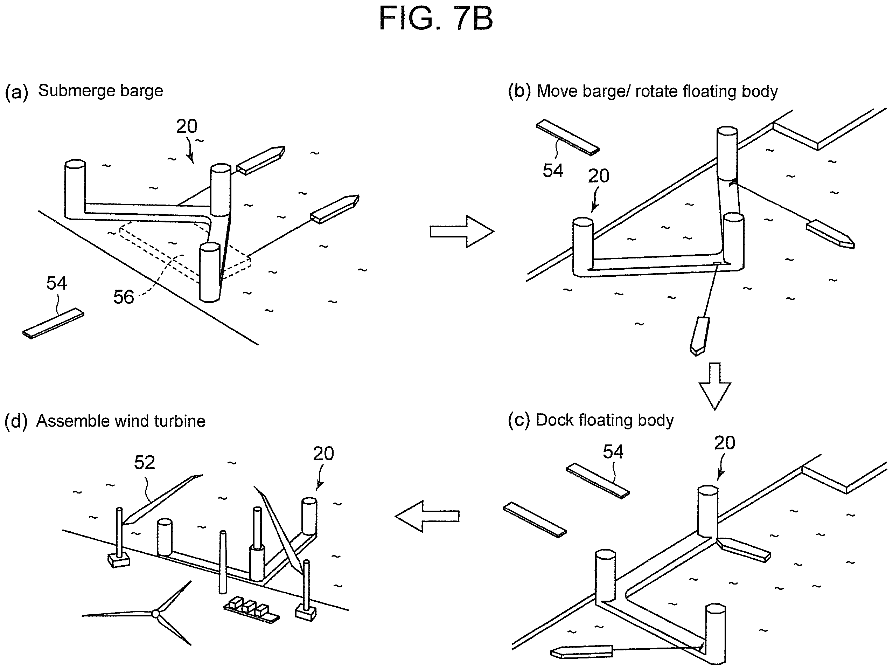

Then, as shown in (a) to (d) of FIG. 7B, the barge 56 is submerged to float the floating body 20 on the water surface. After rotating and docking the floating body 20 to the shore, the wind turbine (wind turbine generator) is assembled.

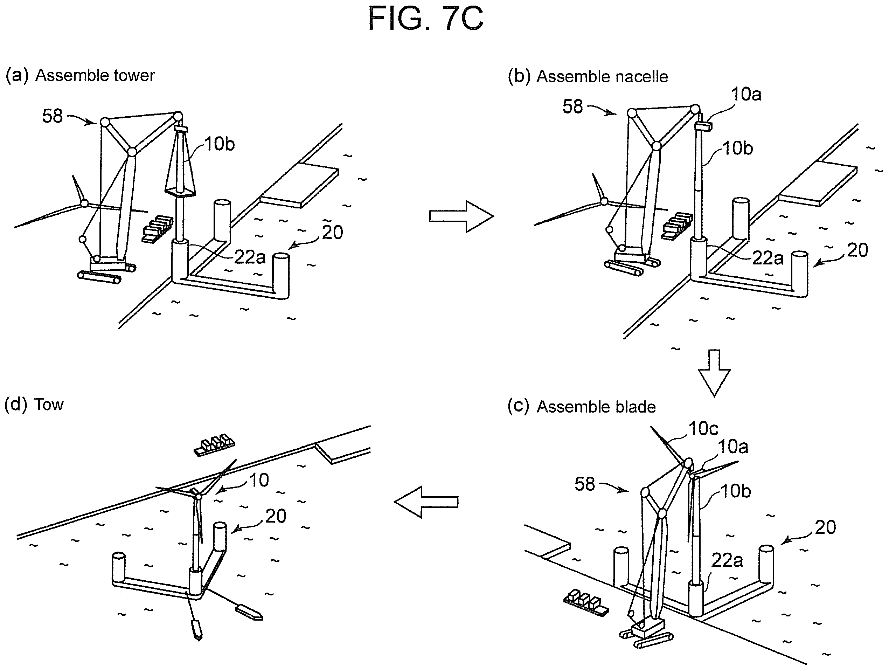

Assembly of the wind turbine (wind turbine generator) is performed as follows. First, the tower 10b assembled by the crane 52 on the land is installed on the top face of the column 22a of the floating body 20 by the crawler crane 58 as shown in (a) of FIG. 7C. Next, as shown in (b) of FIG. 7C, a nacelle 10a is mounted on the tower 10b installed on the top face of the column 22a by the crawler crane 58. Finally, as shown in (c) of FIG. 7C, the blade 10c is mounted to the nacelle 10a by the crawler crane 58.

Then, as shown in (d) of FIG. 7C, the floating body 20 on which the wind turbine generator 10 is installed is towed to the position for floatable installation. Then, as shown in FIG. 8, water is injected into the lower hulls 24 of the floating body 20 towed to the position for floatable installation so as to cause the top faces of the lower hulls 24 submerged.

Subsequently, the floating type wind turbine generating apparatus 1 of the present invention is installed by mooring the floating body 20 by a mooring device (not shown).

As described above, in the installing method for the floating type wind turbine generating apparatus of the present invention, the wind turbine generator 10 is installed on the floating body 20 from the land by a lifting device such as the crawler crane 58 in the state where the floating body 20 is floated on the water surface and docked to the shore. Then, the floating body 20 on which the wind turbine generator 10 is installed is towed to the predetermined installing position, and water is injected into the lower hulls 24 to floatably install the floating type wind turbine generating apparatus. Accordingly, it is easy to secure stability of the floating body 20 upon installing the wind turbine generator 10. Also, as the wind turbine generator 10 is installed on the floating body 20 from the land by a lifting device such as the crawler crane 58, it is not necessary to use a large shipboard crane like the conventional case, thereby reducing the installation cost.

Embodiments of the present invention were described in detail above, but the present invention is not limited thereto, and various amendments and modifications may be implemented within a scope that does not depart from the present invention.

### Industrial Applicability

The present invention is applicable to a floating type wind turbine generating apparatus including a floating body floating on the water surface, and a wind turbine generator installed on the floating body, and to an installing method of the floating type wind turbine generating apparatus.

### Reference Signs List

- 1: Floating type wind turbine generating apparatus
- 10: Wind turbine generator
- 20: Floating body
- 22: Column
- 24: Lower hull
- 25a: Deck outer plate
- 25b: Bottom outer plate
- 25c: Lateral partition wall
- 25d: Longitudinal partition wall
- 25e: Compartment
- 28: Beam member
- 32: Anchor
- 34: Mooring cable
- 36: Mooring device
- 52: Crane
- 54: Dolly
- 56: Barge
- 58: Crawler crane

## Claims

1. A floating type wind turbine generating apparatus (1) comprising:
a floating body (20) adapted to float on water; and
a wind turbine generator (10) installed on the floating body, wherein the floating body (20) is formed into a substantially V-shape in planar view, including three columns (22) and two hollow lower hulls (24) connecting two of the three columns (22), a top face of each of the columns (22) being disposed above a top face of each of the lower hulls (24) and the wind turbine generator (10) being installed on the top face of only one of the three columns (22) that is positioned in the middle of the three columns (22), and
wherein the floating body (20) is configured to be installed on water, and to have water injected into the hollow lower hulls (24) so as to put the floating body (20) in a state where the top faces of the lower hulls (24) are underwater,
wherein the floating body (20) further comprises a mooring device (36) which includes anchors (32) fixed to the bottom of the water, and a plurality of mooring cables (34) connecting the anchors (32)to the three columns (22),
wherein the floating body (20) is configured such that a rotation thereof is prevented by the mooring device (36).

2. The floating type wind turbine generating apparatus (1) according to claim 1,
further comprising a partition wall (25c) formed inside each of the lower hulls (24),
wherein the partition wall (25c) extends in a perpendicular direction to an axial direction and dividing an inside of each of the lower hulls into a plurality of compartments (25e).

3. The floating type wind turbine generating apparatus (1) according to claim 1 or 2, wherein the two lower hulls (24) are connected by a beam member (28).

4. An installing method for the floating type wind turbine generating apparatus (1) according to any of claims 1 to 3, comprising the steps of:
installing the wind turbine generator (1) on the floating body (20) from a land using a lifting device such as a crane (52) in a state where the floating body (20) is floated on a water surface beside the land;
towing the floating body (20) on which the wind turbine generator (10) is installed to a predetermined position on the water; and
injecting water into the lower hulls (24) of the floating body (20) so as to place the top face of each of the lower hulls (24) underwater for the floating body (20) towed to the predetermined position.

## Patentansprüche

1. Windkraftanlage (1) vom schwimmenden Typ, umfassend:
einen Schwimmkörper (20), der dazu ausgebildet ist, auf Wasser zu schwimmen, und
eine Windkraftanlage (10), die auf dem Schwimmkörper angebracht ist,
wobei der Schwimmkörper (20) von oben betrachtet in einer im Wesentlichen V-förmigen Gestalt ausgebildet ist, umfassend drei Säulen (22) und zwei hohle tiefer liegenden Rümpfe (24), die zwei der drei Säulen (22) verbinden, wobei eine obere Fläche von jeder der Säulen (22) über einer oberen Fläche von jedem der tiefer liegenden Rümpfe (24) angeordnet ist und die Windkraftanlage (10) auf der oberen Fläche von nur einer der drei Säulen (22), die in der Mitte der drei Säulen (22) positioniert ist, angebracht ist, und
wobei der Schwimmkörper (20) dazu ausgebildet ist, auf einem Gewässer angebracht zu werden und in die hohlen tiefer liegenden Rümpfe (24) Wasser einzuspritzen, um den Schwimmkörper (20) in einen Zustand zu versetzen, in dem die oberen Flächen der tiefer liegenden Rümpfe (24) unter Wasser sind,
wobei der Schwimmkörper (20) ferner eine Festmachvorrichtung (36) umfasst, die Anker (32), welche an dem Grund des Gewässers befestigt werden, und eine Vielzahl von Festmacherseilen (34), welche die Anker (32) mit den drei Säulen (22) verbinden, umfasst,
wobei der Schwimmkörper (20) derart ausgebildet ist, dass eine Drehung davon durch die Festmachvorrichtung (36) verhindert wird.

2. Windkraftanlage (1) vom schwimmenden Typ nach Anspruch 1,
ferner umfassend eine Trennwand (25c), die innerhalb jedes der tiefer liegenden Rümpfe (24) ausgebildet ist,
wobei sich die Trennwand (25c) in einer zu einer axialen Richtung senkrechten Richtung erstreckt und ein Inneres von jedem der tiefer liegenden Rümpfe in eine Vielzahl von Kammern (25e) unterteilt.

3. Windkraftanlage (1) vom schwimmenden Typ nach Anspruch 1 oder 2, wobei die zwei tiefer liegenden Rümpfe (24) durch ein Balkenglied (28) verbunden sind.

4. Anbringungsverfahren für die Windkraftanlage (1) vom schwimmenden Typ nach einem beliebigen der Ansprüche 1 bis 3, umfassend folgende Schritte:
Anbringen der Windkraftanlage (1) an dem Schwimmkörper (20) von Land aus mittels einer Hebevorrichtung, beispielsweise einem Kran (52), in einem Zustand, in dem der Schwimmkörper (20) neben dem Land auf einer Wasseroberfläche schwimmt,
Schleppen des Schwimmkörpers (20), an dem die Windkraftanlage (10) angebracht ist, zu einer vorbestimmten Position auf dem Wasser, und
Einspritzen von Wasser in die tiefer liegenden Rümpfe (24) des Schwimmkörpers (20), um die obere Fläche von jedem der tiefer liegenden Rümpfe (24) des zu der vorbestimmten Position geschleppten Schwimmkörpers (20) unter Wasser zu positionieren.

## Revendications

1. Appareil de génération d'énergie à éolienne du type flottant (1) comportant :
un corps flottant (20) prévu pour flotter sur l'eau ; et
une éolienne (10) installée sur le corps flottant,
dans lequel le corps flottant (20) présente une forme sensiblement en V dans une vue en plan, comprenant trois colonnes (22) et deux coques inférieures creuses (24) reliant chacune deux des trois colonnes (22), une face supérieure de chacune des colonnes (22) étant disposée au-dessus d'une face supérieure de chacune des coques inférieures (24) et l'éolienne (10) étant installée sur la face supérieure de seulement une des trois colonnes (22) qui est positionnée au milieu des trois colonnes (22), et
dans lequel le corps flottant (20) est configuré pout être installé sur l'eau, et pour avoir de l'eau injectée dans les coques inférieures creuses (24) de façon à mettre le corps flottant (20) dans un état où les faces supérieures des coques inférieures (24) sont sous l'eau,
dans lequel le corps flottant (20) comporte en outre un dispositif d'amarrage (36) qui comprend des ancres (32) fixées au fond de l'eau, et une pluralité de câbles d'amarrage (34) reliant les ancres (32) aux trois colonnes (22),
dans lequel le corps flottant (20) est configuré de telle sorte qu'une rotation de celui-ci est empêchée par le dispositif d'amarrage (36).

2. Appareil de génération d'énergie à éolienne du type flottant (1) selon la revendication 1,
comportant en outre une paroi de séparation (25c) formée à l'intérieur de chacune des coques inférieures (24),
dans lequel la paroi de séparation (25c) s'étend dans une direction perpendiculaire à une direction axiale et divisant un intérieur de chacune des coques inférieures en une pluralité de compartiments (25e).

3. Appareil de génération d'énergie à éolienne du type flottant (1) selon la revendication 1 ou 2, dans lequel les deux coques inférieures (24) sont reliées par une traverse (28).

4. Procédé d'installation pour l'appareil de génération d'énergie à éolienne du type flottant (1) selon l'une quelconque des revendications 1 à 3, comportant les étapes de :
installation de l'éolienne (1) sur le corps flottant (20) depuis la terre en utilisant un dispositif de levage tel qu'une grue (52) dans un état où le corps flottant (20) est amené à flotter sur une surface de l'eau près de la terre ; remorquer le corps flottant (20) sur lequel l'éolienne (10) est installée dans une position prédéterminée sur l'eau ; et
injecter de l'eau dans les coques inférieures (24) du corps flottant (20) de façon à placer la face supérieure de chacune des coques inférieures (24) sous l'eau pour le corps flottant (20) remorqué dans la position prédéterminée.
